# EUROPÄISCHE PATENTANMELDUNG

(11) **EP 2 649 874 A1**
(43) Veröffentlichungstag der Anmeldung: **16.10.2013**
(21) Anmeldenummer: 13001904.5
(22) Anmeldetag: 12.04.2013
(51) Int. Cl.: A01G 23/08, A01G 23/099

(54) **Ernteanordnung sowie Verfahren zur Holzernte**

(30) Priorität: 13.04.2012 DE 102012007340
(71) Anmelder: Föller, Jörg, 75334 Straubenhardt (DE)
(72) Erfinder: Föller, Jörg, 75334 Straubenhardt (DE)
(74) Vertreter: Reinhardt, Harry

(57) **Zusammenfassung**

Eine Ernteanordnung für eine Vorrichtung zur Holzernte weist ein in einem als Sägekasten ausgebildeten Gehäuse (13) angeordnetes Schneidmittel (14) und eine Markierungsvorrichtung (15) zur Aufbringung einer Markierung in Form eines Ident-Trägers auf mindestens ein von einem Baum (17) gewonnenes Holzstück auf. Der Markierungsvorrichtung (15) ist ein am Gehäuse (13) angeordnetes Magazin zur Aufnahme und Bereitstellung einer Vielzahl von Trägern (16) zugeordnet. Dadurch, dass die Markierungsvorrichtung (15) mit dem Wechselmagazin (18) neben dem Schneidmittel (14) im Sägekasten der Ernteanordnung (12) angeordnet ist, wird eine Ernteanordnung mit einer automatischen Applikation von Ident-Trägern geschaffen.

## Beschreibung

Die Erfindung betrifft eine mit einer Markierungsvorrichtung versehene Ernteanordnung für eine Vorrichtung zur Holzernte nach dem Oberbegriff des Anspruches 1 sowie ein Verfahren zur Holzernte nach dem Oberbegriff des Anspruches 9.

### Stand der Technik

Vorrichtungen zur Kennzeichnung eines Holzstammes werden in der Holzwirtschaft bei der Ernte eingesetzt. Sinn und Zweck solcher Vorrichtungen ist es, geschlagenes oder geerntetes Holz zu kennzeichnen, sodass dessen Weg vom Wald nach dem Schlagen bis zur Weiterverarbeitung, beispielsweise in einem Sägewerk, lückenlos verfolgt werden kann. Während hierzu früher Markierungselemente in Form von Plättchen verwendet wurden, die mit Kenndaten in Form von Kennziffern versehen nach dem Schlagen eines Baumes an diesem befestigt wurden, werden heute für diesen Zweck regelmäßig Träger verwendet, die mit Transpondern versehen sind, wie dies zum Beispiel aus der DE 10 2006 015 899 A1 oder EP 1 693 791 B1 bekannt ist. Mit diesen Transpondern können neben den spezifischen Holzdaten auch weitere Informationen erfasst und dem entsprechenden Holzstamm zugeordnet werden. So können zum Beispiel Personendaten, GEO-Daten zum Auffinden von Holzlagerplätzen durch den Spediteur, Datum und Zeitpunkt der Ernte, Wetterlage und vieles mehr gespeichert werden und dem Holzstamm zugeordnet werden. Das Beschreiben und Auslesen des Transponders erfolgt dabei drahtlos, wobei insbesondere zum Auslesen kein Sichtkontakt erforderlich ist und auch in den Wintermonaten eine Erkennung der Holzstämme unter Schnee und Eis sicher möglich ist.

Aus der dem Oberbegriff der unabhängigen Ansprüche zugrunde liegenden WO 2011/159 226 A1 ist eine Vorrichtung zur Holzernte bekannt, wobei einer Ernteanordnung eine Markierungsvorrichtung in Art eines automatisch betriebenen Hammers zugeordnet ist. Diese Vorrichtung wird durch die Ernteanordnung bewegt, ist jedoch in einem gesonderten Gehäuse angeordnet, sodass sicherzustellen ist, dass sie bei Betätigung der Ernteanordnung nicht beschädigt wird. Die Markierungsträger können als RFID Tags auf einer Art Magazin und durch geeignete Fördermittel als Transporthilfsmittel bereitgestellt werden, wobei deren konkrete Ausgestaltung offen bleibt.

Aus der WO 2009/151 374 A1 ist eine vergleichbare Anordnung bekannt, bei der an einem Hammerkopf eine Vielzahl von Markierungsträgern angeordnet sind. Die Vorrichtung bewegt sich mit der Ernteanordnung, wobei bedarfsweise Dämpfungsmittel vorgesehen sind, um eine entsprechende Steuer- und Regeleinheit vor Stößen zu schützen. Über die Regeleinheit kann bedarfsweise eine gezielte Anbringung an geeigneter Stelle des Holzes erfolgen, sofern durch die senkrecht zur Schnittfläche verlaufende, rotatorische Schwenkbewegung das hammerartige Fixierungselement nicht mit dem Sägeschwert kollidiert.

Aus der DE 697 18 349 T2 sind ein Verfahren und eine Vorrichtung zur Holzernte bekannt, wobei einer Ernteanordnung eine Markierungsvorrichtung zugeordnet ist, die am Austrittsende der Ernteanordnung angeordnet ist, sodass unmittelbar nach dem Abschneiden des Stamms ein Träger am Holzstück aufgebracht werden kann. Eine vergleichbare Anordnung ist aus der WO 02/13597 A1 bekannt.

Zur Kennzeichnung von Holzstämmen ist es ferner bekannt, einen Hammer zur manuellen Applikation von Ident-Trägern zu verwenden. Dies ist jedoch beim automatisierten Fällen mittels Vollerntern ein zusätzlicher manueller Schritt, der nicht oder nur unter großem Aufwand während des Fällprozesses möglich ist.

Farbmarkierungen an der Stirnseite in Verbindung mit dem Abtrennen durch das Sägeschwert, wie es als eine Ausführungsform auch in der DE 697 18 349 T2, Seite 10, mittlerer Absatz beschrieben wird, bieten im Vergleich zu Ident-Trägern nur eine beschränkte Informationskapazität. Zudem sind diese Farbmarkierungen sehr anfällig gegen Verschmutzung. Ein Anbringen von Farbmarkierungen mittels des Sägeschwerts hat zudem den Nachteil, dass kein Infoträger angebracht werden kann, der dicker ist als das Sägeschwert bzw. die Kette, da der Schlitz im Holz, der sich beim Sägevorgang bildet, auf diese Breite begrenzt ist.

Ein Anbringen von RFID-Tags mittels einer Schwenkvorrichtung unter dem Sägekasten kann nur im Idealfall zu einer mittigen Anbringung auf der Schnittfläche des

Holzstamms führen. Eine derartige mittige Platzierung von Informationsträgern ist aber wichtig, da beim Transport die äußeren Randbereiche der Stirnseite eines Holzes stärker belastet werden und dadurch das Risiko einer Beschädigung des Ident Trägers höher ist. Eine derartige Lösung kann auch nicht auf die je nach Holzart unterschiedlichen Befestigungseigenschaften eingehen.

Vorgeschlagen wurde auch bereits eine Anbringung von Ident-Trägern im Bereich der Baumrinde, was jedoch den Nachteil hat, dass dieser bei Lagerung und Transport beschädigt werden kann, da Baumstämme meist aufeinanderliegend gelagert und transportiert werden. Zudem ist der Ident-Träger nicht von außen zugänglich, das heißt, es ist meist nicht möglich, an die Informationen zu gelangen.

### Aufgabenstellung

Ausgehend von diesem Stand der Technik liegt der vorliegenden Erfindung die Aufgabe zugrunde, eine Ernteanordnung mit einer automatischen Applikation von Ident-Trägern zu schaffen.

Diese Aufgabe wird durch eine Ernteanordnung mit den Merkmalen des Anspruches 1 sowie durch ein Verfahren mit den Merkmalen des Anspruches 9 gelöst.

An der Ernteanordnung, also an dem zum jeweils zu fällenden Stamm bewegten Teil der Erntemaschine, wird dazu ein Wechselmagazin für die Träger vorgesehen, das grundsätzlich mitbewegt wird. Wechselmagazin und Markierungsvorrichtung sind unmittelbar im Sägekasten neben dem Schneidmittel, also neben dem Sägeschwert angeordnet, und damit durch dessen Gehäuse, den ohnehin vorhandenen Sägekasten geschützt. Dies führt zu einer sehr geringe Bauhöhe und einer hohen Dynamik bei der Applikation der Träger. Gleichzeitig wird dadurch eine unmittelbare Nähe zur Schnittfläche des Stamms geschaffen, die eine zuverlässige Applikation des Trägers in der Schnittfläche ermöglicht. Um die Beweglichkeit der Ernteanordnung nicht einzuschränken, muss eine derartige Anordnung einerseits sehr kompakt ausgebildet sein, andererseits ist sie im Bereich des Gehäuses, also im Bereich des Sägekasten grundsätzlich starken Belastungen durch Beschleunigungen im Bereich von mehreren g als auch Verschmutzung ausgesetzt. Ein derartiges Magazin muss daher sehr robust ausgebildet sein.

Da im Bereich der Ernteanordnung auch die Greifer zum Greifen des Stamms vorgesehen sind, kann durch eine entsprechende Sensorik vorzugsweise der Durchmesser des Stamms bestimmt werden, sodass der Applikator so angesteuert werden kann, dass ein etwa stammmittiges Anbringen des Trägers erleichtert wird.

Um einen entsprechenden robusten Aufbau zu ermöglichen, werden vorzugsweise die Teile des Magazins sowie die gegenüber dem Stand der Technik neue Vereinzelungsvorrichtung als auch die Markierungsvorrichtung entsprechend robust ausgebildet. Für die Markierungsvorrichtung wird ein Scherenhubmechanismus verwendet, der gleichzeitig den Vorteil hat, dass eine Bewegung linear verlaufend oder entlang einer Kurvenbahn in Richtung auf den Anbringungspunkt erfolgen kann. Die Anordnung dieses Scherenhubmechanismus im Sägekasten gestattet eine Platz sparende Bewegung parallel zur Schnittfläche und nicht wie im Stand der Technik rotatorisch senkrecht dazu.

Eine automatische Versorgung mit neuen Trägern in Form von Transponder-Tags ist damit aus dem Wechselmagazin grundsätzlich möglich. Mit der so ausgestatteten Markierungsvorrichtung kann eine Anbringung der Tags in einem Zeitbereich von unter 5 Sekunden erfolgen, da der Start des Applikators parallel zum Ablängen des Holzstamms erfolgen kann, während nach dem Stand der Technik diese Vorgänge seriell erfolgen müssen.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand von den in den Figuren dargestellten Ausführungsbeispielen näher erläutert. Es zeigen:
- Fig. 1: eine Erntemaschine in Seitenansicht,
- Fig. 2, 3: das Gehäuse der Ernteanordnung mit Säge- und Markierungsvorrichtungen in einer dreidimensionalen Ansicht und in einer Ansicht von vorne,
- Fig. 4, 5: eine Draufsicht und eine Ansicht von vorn der Markierungsvorrichtung mit Wechselmagazin,
- Fig. 6: eine Draufsicht auf das geöffnete Wechselmagazin,
- Fig. 7: eine Draufsicht auf den Scherenhubmechanismus,
- Fig. 8: eine Darstellung des Scherenhubmechanismus in komprimierter Stellung sowie gestrichelt dargestellt in teilweise und ausgefahrener Stellung,
- Fig. 9 bis 14: verschiedene Fördermittel,
- Fig. 15 bis 20: verschiedene Formen der Träger.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrens- Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

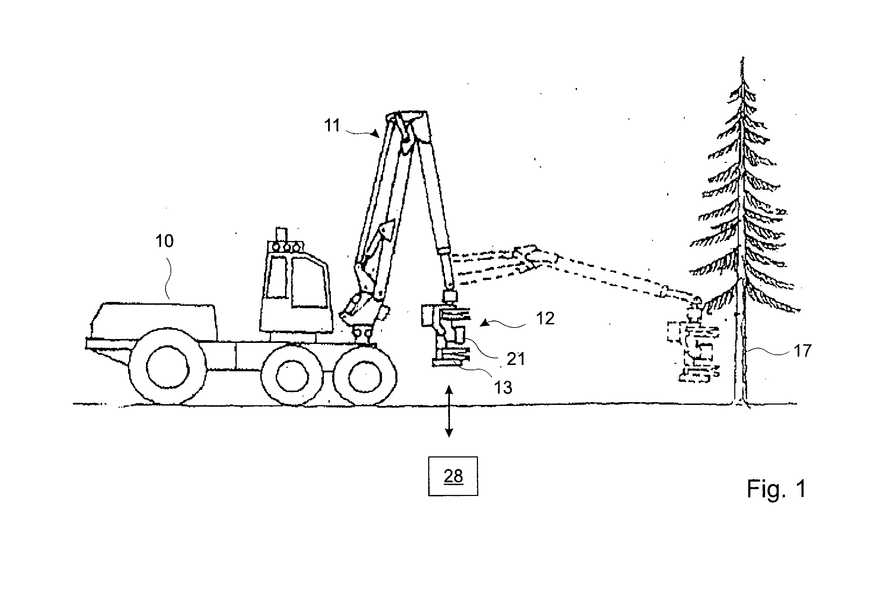

Figur 1 zeigt eine auf einem Fahrzeug 10 angeordnete Erntemaschine 11 mit einer daran angeordneten Ernteanordnung 12, an der ein Gehäuse 13 zur Aufnahme eines Schneidmittels 14 wie einer Säge vorgesehen ist. Im Bereich der Ernteanordnung 12 sind ferner Greifer 21 vorgesehen, um einen Baum 17 zu greifen. Beim Ernten von Holz wird die Ernteanordnung mittels der kranartigen Erntemaschine 11 in die in Fig. 1 gestrichelte Stellung verbracht, sodass der Baum 17 gefällt werden kann.

Die Ernteanordnung ist hier eine sogenannte Einzelgriff-Ernteanordnung, das heißt eine Anordnung, die einen Baum auf dem Holz erfassen, ihn abschneiden, ablegen und dann den Stamm bedarfsweise mithilfe von Zuführmitteln durch die Anordnung treiben und dabei gleichzeitig den Stamm von den Ästen befreien kann. Es versteht sich jedoch von selbst, dass die Ernteanordnung auch für sich betrieben werden kann, das heißt ohne Astentfernungsmittel oder dergleichen. Grundsätzlich ist die Vorrichtung auch auf die sogenannte Vollstammbehandlung anwendbar, bei der es kein Querzerschneiden des Stamms in kleinere Stücke gibt. Der in den Ansprüchen verwendet Ausdruck "Holzstück" soll in einem solchen Fall auch den Stamm als Ganzes umfassen. Ein Holzstück ist insofern ein aus einem Baum 17 gewonnenes Holz.

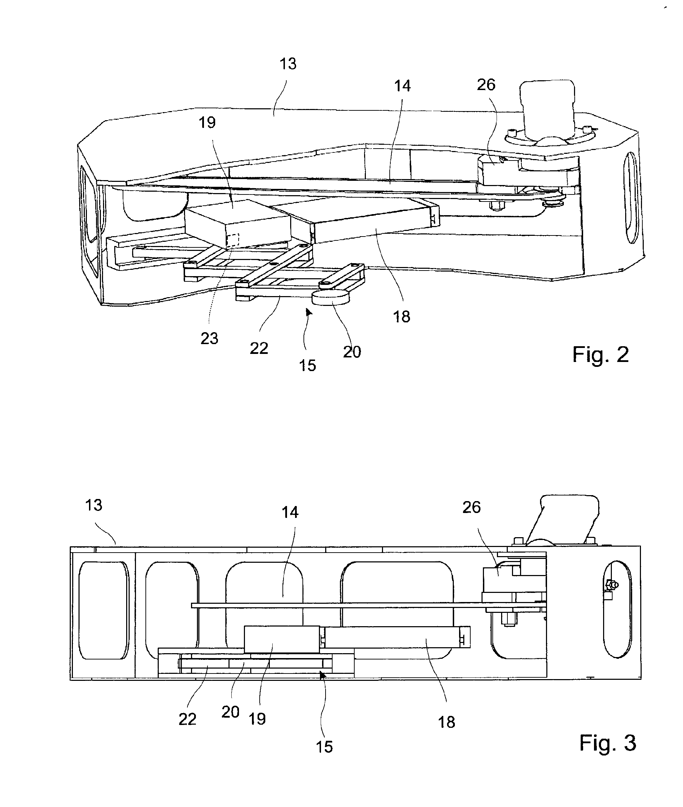

Die Figuren 2 und 3 zeigen ein Gehäuse 13, wie es an der Ernteanordnung angebracht ist und das üblicherweise das von einem Motor 26 angetriebene Schneidmittel umfasst bzw. abdeckt. Bei dem Schneidmittel 14 handelt es sich meist um ein Sägeschwert, wobei auch andere Schneidmittel vorgesehen sein können, die in der Lage sind, den Baum 17 zu schneiden. An der Ernteanordnung ist eine Markierungsvorrichtung 15 angeordnet, die dazu bestimmt ist, Markierungen in Form von Trägern 16 an dem geschnittenen Holz anzubringen. Der Markierungsvorrichtung 15 ist ein an einem Gehäuse angeordnetes Magazin 18 für die Träger 16 zugeordnet. Die Träger sind dabei vorzugsweise Transponder-Tags, auf denen die verschiedensten spezifischen Holzdaten aber auch zusätzliche Informationen aus der Prozesskette der Holzverarbeitung erfasst werden können. So können zum Beispiel Personendaten, GEO-Daten, Datum und Zeitpunkt der Ernte, Wetterlage und vieles mehr gespeichert werden und dem Holzstamm zugeordnet werden, sobald der Träger 16 am Holzstamm angebracht ist.

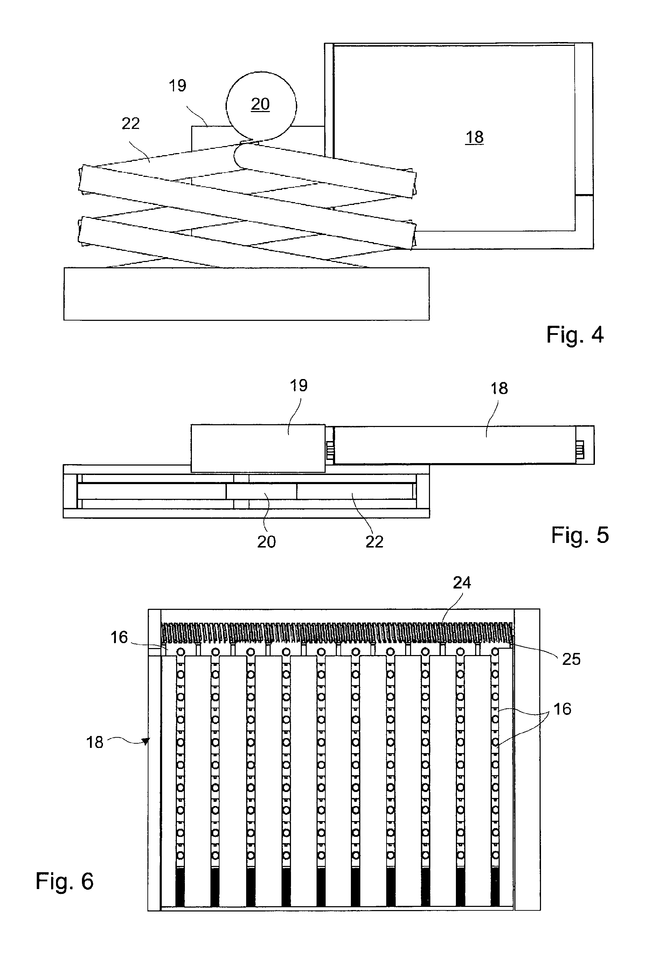

Die Markierungsvorrichtung 15 mit dem Wechselmagazin 18 kann äußerlich am Gehäuse 13 der Ernteanordnung 12 angebracht werden, vorzugsweise befindet sie sich jedoch innerhalb des Gehäuses und damit neben dem Schneidmittel 14. Dies erfordert gemäß Fig. 2, 7 und 8 einen flachen und kompakten Aufbau der Vorrichtung zur automatischen Applikation von Trägern 16 wie Ident-Trägern und Transponder-Tags am Vollernter. Gemäß Fig. 2 und 3 sind das Wechselmagazin 18 sowie eine Vereinzelungsvorrichtung 19 neben dem Schneidmittel 14 angebracht. Das Magazin 18 für die Träger 16 ist ein automatisches Wechselmagazin und in Fig. 6 nochmals dargestellt. In verschiedenen Reihen nebeneinander und über ein Fördermittel 24 zu befördern, sind dort die Träger 16 vorgesehen. Im Ausführungsbeispiel umfasst ein derartiges Wechselmagazin z.B. 107 derartige Träger 16, was beim üblichen Betrieb für ungefähr ein bis zwei Stunden an Arbeitszeit ausreicht. Danach kann das Wechselmagazin komplett entfernt und durch ein neues ersetzt werden.

Wechselmagazin und Markierungsvorrichtung 15 sind vorzugsweise auch deshalb im Gehäuse, sprich im Sägekasten der Ernteanordnung 12 angeordnet, da bei Betrieb der Erntemaschine hohe Beschleunigungen als auch Verschmutzungen anfallen, sodass das Gehäuse 13 einen entsprechenden Schutz bieten kann. Dies erfordert jedoch eine kleine Baugröße, um die Anordnung innerhalb der bekannten Gehäuse 13 zu ermöglichen. Das Wechselmagazin fördert die Träger 16 der Vereinzelungsvorrichtung 19 zu, die die Träger dann vereinzelt einem Applikator 20 der Markierungsvorrichtung 15 zur Verfügung stellt. Insofern besitzen das Magazin 18 und/oder die Vereinzelungsvorrichtung 19 Fördermittel 24 zur vorzugsweise vollautomatischen Zuführung der Träger 16 zum Applikator 20. Die Fördermittel 14 stehen vorzugsweise formschlüssig mit dem Träger oder daran angebrachten Förderelementen 25 in Wirkverbindung. Hierauf wird weiter unten noch näher eingegangen.

Die Ernteanordnung 12 weist wenigstens zwei Greifer 21 zum Greifen des Holzstücks auf, wobei eine Sensorik vorgesehen sein kann, die über den Abstand der Greifer den Durchmesser der Holzstücke bestimmt. Diese Information wird an Steuermittel 28 gegeben, die aufgrund des ermittelten Durchmessers den Applikator 20 der Markierungsvorrichtung 15 zur Anbringung des Trägers 16 steuern. Ziel ist dabei eine vorzugsweise stammmittige oder Stammmitte nahe Anbringung des Trägers 16, da dieser dort am besten geschützt und am besten zugänglich ist.

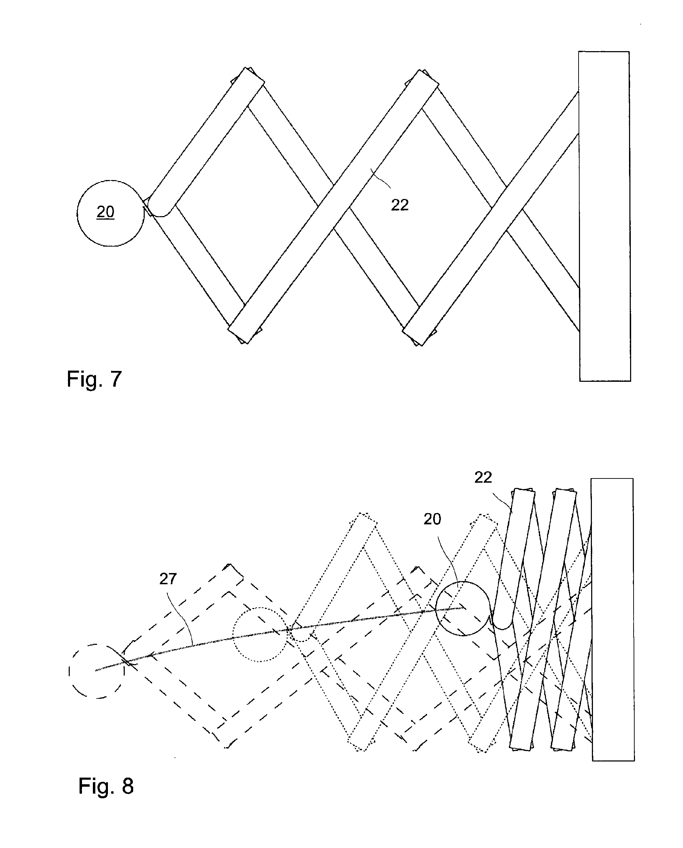

Die Bewegungsrichtung des Applikators 20 erfolgt quer zur Längsrichtung des Holzstücks, vorzugsweise parallel zur Schneidfläche des Schneidmittels 14. Der Applikator 20 ist durch den Scherenhubmechanismus 22 gemäß den Figuren 7 und 8 ausfahrbar und dazu bestimmt, den Träger 16 vorzugsweise stammmittig an der Schnittfläche des Holzstücks anzubringen. Der Applikator 20 ist dazu am Ende des Scherenhubmechanismus angebracht. Fig. 8 verdeutlicht, dass sich der Applikator 20 beim Ausfahren des Scherenhubmechanismus auf einer Kurvenbahn 27 bewegt, sodass eine Gerade mit einer rotatorischen Bewegung überlagert werden kann. Dadurch ist es möglich, dass bereits beim Ablängen bzw. Schneiden oder Fällen des Baums 17 der Applikator 20 mit dem daran befestigten Träger 16 ausgefahren werden kann, sodass in sehr kurzer Zeit die Anbringung des Applikators nach dem Ernten des Baums erfolgen kann. In der Praxis hat sich eine Applikation des Trägers in einem Zeitraum von unter 5 Sekunden als durchführbar erwiesen. Die Anordnung des Scherenhubmechanismus im Sägekasten gestattet eine Platz sparende Bewegung parallel zur Schnittfläche. Damit kann auf eine Raum greifende rotatorische Schwenkbewegung verzichtet werden. Der Scherenhubmechanismus kann aber auch so ausgestaltet werden, dass der Applikator sich beim Ausfahren entlang einer linear verlaufenden Bewegungsbahn bewegt, indem z.B. zwei Loslager im Scherenhub verwendet werden. Die Verwendung eines Scherenhubmechanismus hat zudem den Vorteil, dass im Gegensatz zum Stand der Technik über seinen Antrieb für die Applikation der Träger eine Einstellmöglichkeit für Anpressdruck, Verweilzeit und Einpresstiefe geschaffen wird. Damit kann auf unterschiedliche Holzeigenschaften wie weiches oder hartes Holz eingegangen werden und damit der Träger zuverlässig, z.B. an die jeweilige Holzart angepasst, befestigt werden.

An der Markierungsvorrichtung ist ferner eine Lesevorrichtung 23 vorgesehen, die die Träger 16, das heißt die Transponder-Tags beim Applizieren ausliest, das heißt es wird die Kennung des Trägers 16 registriert und diese wird mit Daten versehen, sodass gleichzeitig eine Funktionskontrolle vorgenommen werden kann und die Daten in einer Datenbank abgespeichert werden können. Es kann aber auch eine Schreiblesevorrichtung vorgesehen sein, die die Träger 16 beschreibt und/oder ausliest.

Die Ernteanordnung 12 kann insofern für sich einer bestehenden Erntemaschine zugeführt werden, es besteht jedoch genauso die Möglichkeit, die Erntemaschine von vornherein mit einer derartigen Ernteanordnung 12 auszustatten.

Verfahrensgemäß wird die Erntemaschine mit der Ernteanordnung 12 so betrieben, dass zum Schneiden von Holzstücken Schneidmittel 14 in einem Gehäuse vorgesehen sind. Vorgesehen ist ferner eine Markierungsvorrichtung 15 zum Aufbringen einer Markierung an dem gewonnenen Holzstück. Die Träger 16 werden aus einem am Gehäuse 13 angeordneten Magazin 18 der Markierungsvorrichtung 15 zugeführt. Dieses Zuführen erfolgt dadurch, dass die Träger im Gehäuse 13 aus dem Wechselmagazin über ein Fördermittel 24 einer Vereinzelungsvorrichtung 19 zugeführt werden, wobei nicht alle Fördermittel ein Förderhilfsmittel wie eine Befestigung an einem Band benötigen, sondern auch unmittelbar selbst gefördert werden können. Die Träger können also die "Transporteigenschaft" aufweisen, ohne Förderhilfsmittel aus dem Wechselmagazin 18 entnommen zu werden. Dort vereinzelt werden sie dann dem Applikator 20 zugeführt, der im ausgefahrenen Zustand des Scherenhubmechanismus 22 den Träger 16 stirnseitig am Holzstamm etwa mittig befestigt. Das mittige Befestigen erfolgt insbesondere dadurch, dass der Durchmesser des Holzstücks aufgrund des Abstands der Greifer 12 bestimmt wird und der Applikator 20 entsprechend angesteuert wird. Der Träger 16 wird beim Applizieren durch die Lesevorrichtung 23 ausgelesen.

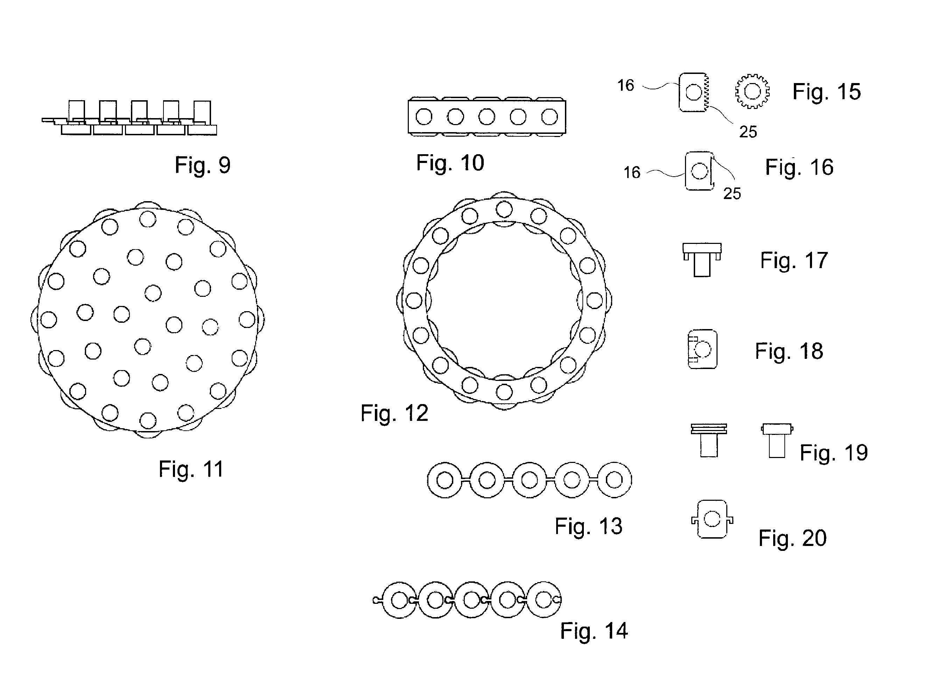

Das Befördern der Träger 16 kann auf verschiedene Art und Weise innerhalb des Wechselmagazins erfolgen, wofür in den Figuren 9 bis 20 einige Beispiele ausgeführt sind. Im Wesentlichen geht es darum, eine zuverlässige Bestückung des Applikators 20 mit Trägern 16 zu erreichen. Diese Beförderung kann grundsätzlich auch kraftschlüssig über Gleitbänder erfolgen, bevorzugt erfolgt eine formschlüssige Beförderung, möglichst ohne dass Transporthilfsmittel wie Bänder erforderlich sind, an denen die Träger vormontiert werden müssen. Fig. 6 zeigt eine Gewindewelle als Fördermittel 24, die mit gegengleichen Anformungen der Träger 16 in Eingriff steht. Denkbar sind jedoch ebenso die Verwendungen von Einzelverbindern gemäß Fig. 9, Trägerbändern gemäß Fig. 10, Trägerplatten gemäß Fig. 11 oder eines Trägerrings gemäß Fig. 12. Dabei sind feste Verbindungen gemäß Fig. 13 ebenso möglich wie Verbindungsnippel gemäß Fig. 14. Die Fördermittel 24 nutzen die Formen der Träger 16 oder die Form von Verbindungsgliedern, um die Träger 16 vollautomatisch zu transportieren. Verbindungsglieder, die dem automatischen Transport der Träger dienen oder unterstützen, können zum Beispiel während oder am Ende des Transports abgeschert oder abgetrennt werden. Die Verbindungsglieder können wie auch die Form der Träger selbst spezielle Förderformen oder Anbauteile besitzen, die dem automatischen Transport dienen. Denkbar sind zum Beispiel Nippel-Lasche Verbindungen, Trägerbänder, Einzelverbindungen oder auch feste Verbindungen, die bereits durch Spritzgießen, Ankleben oder Einpressen an den Trägern gebildet sind. Auch die Träger 16 selbst können spezielle Förderformen oder Anbauteile aufweisen, wie dies zum Beispiel in den Figuren 15 bis 20 dargestellt ist. Denkbar sind Gewindeverzahnungen wie in Fig. 15 oder Fig. 6 dargestellt, Einrastformen wie in Fig. 16 dargestellt, Bolzen wie in Fig. 17, Bohrungen wie in Fig. 18, die mit dem Fördermitteln in Eingriff kommen, Führungsschienen/nuten wie in Fig. 19 oder Mitnahmenippel wie in Fig. 20.

Als Fördermittel zum automatischen Transport der Träger 16 kommen zum Beispiel in Betracht Schneckenräder, Zahnräder, reibschlüssige Verbindungen wie zum Beispiel ein Gummiband, Andreaskreuze, Linearaktoren, gleich wie betrieben, zum Beispiel hydraulisch, magnetisch oder elektromechanisch angetrieben, Transportscheiben wie zum Beispiel ein rotatorischer Fördermechanismus, Schwenkarme, Förderketten mit Haken oder ähnlichem, Federn, Druckluft, Cliphalter, mit denen zum Beispiel der Träger in Nuten eingeklickt wird, Saugnäpfe, Magneten, Führungskanäle mit einer Beförderung durch Aufbringen einer externen Kraft in Form von Federn, Zylindern und dergleichen oder Stiftfinger, die in Bohrungen eingreifen. Im Wesentlichen muss lediglich sichergestellt sein, dass die Träger bzw. Transponder-Tags zuverlässig und kontinuierlich gefördert werden können, und dies auch unter den Belastungen, denen die Vorrichtung beim Betrieb in unebenem Gelände und im Wald ausgesetzt ist.

### Bezugszeichenliste

- 10: Fahrzeug
- 11: Erntemaschine
- 12: Ernteanordnung
- 13: Gehäuse
- 14: Schneidmittel
- 15: Markierungsvorrichtung
- 16: Träger
- 17: Baum
- 18: Magazin
- 19: Vereinzelungsvorrichtung
- 20: Applikator
- 21: Greifer
- 22: Scherenhubmechanismus
- 23: Lesevorrichtung
- 24: Fördermittel
- 25: Förderelement
- 26: Motor
- 27: Kurvenbahn
- 28: Steuermittel

## Patentansprüche

1. Ernteanordnung (12) für eine Vorrichtung zur Holzernte, wobei die Ernteanordnung ein in einem als Sägekasten ausgebildeten Gehäuse (13) angeordnetes Schneidmittel (14) und eine Markierungsvorrichtung (15) zur Aufbringung einer Markierung in Form eines Trägers (16) auf mindestens ein von einem Baum (17) gewonnenes Holzstück aufweist,
wobei der Markierungsvorrichtung (15) ein am Gehäuse (13) angeordnetes Magazin zur Aufnahme und Bereitstellung einer Vielzahl von Trägern (16) zugeordnet ist,
**dadurch gekennzeichnet, dass** die Markierungsvorrichtung (15) mit dem Wechselmagazin (18) neben dem Schneidmittel (14) im Sägekasten der Ernteanordnung (12) angeordnet ist.

2. Ernteanordnung nach Anspruch 1, **dadurch gekennzeichnet, dass** dem automatischen Wechselmagazin (18) für die Träger (16) ein eine Vereinzelungsvorrichtung (19) zur vorzugweise vollautomatischen Zufuhr einzelner Träger (16) an einen Applikator (20) der Markierungsvorrichtung (15) zugeordnet ist.

3. Ernteanordnung nach Anspruch 1 oder 2, **dadurch gekennzeichnet, dass** das Wechselmagazin (18) und/oder die Vereinzelungsvorrichtung (19) Fördermittel (24) zur Zuführung der Träger (16) an den Applikator (20) aufweisen, die zur vorzugsweise formschlüssigen Beförderung der Träger (16) mit den Trägern (16) oder ihnen zugeordneten Förderelementen (25) in Wirkverbindung stehen.

4. Ernteanordnung nach einem der vorhergehenden Ansprüche, **dadurch gekennzeichnet, dass** sie wenigstens zwei Greifer (21) zum Greifen des Holzstücks aufweist, wobei eine Sensorik zur Bestimmung des Durchmessers des Holzstücks aufgrund des Abstands der Greifer vorgesehen ist, und dass Steuermittel (28) vorgesehen sind, die basierend auf dem ermittelten Durchmesser einen Applikator (20) der Markierungsvorrichtung (15) zur vorzugsweise stammmittigen oder Stammmitte nahen Anbringung des Trägers (16) steuern.

5. Ernteanordnung nach Anspruch 4, **dadurch gekennzeichnet, dass** der Applikator (20) eine vorzugsweise linear verlaufende Bewegungsrichtung aufweist, die quer zur Längsrichtung des Holzstücks, vorzugsweise parallel zur Schneidfläche des Schneidmittels (14) ist.

6. Ernteanordnung nach einem der Ansprüche 2 bis 5, **dadurch gekennzeichnet, dass** der ausfahrbare Applikator (20) dazu bestimmt ist, den Träger (16) vorzugsweise mittig an der Schnittfläche des Holzstücks anzubringen.

7. Ernteanordnung nach einem der vorhergehenden Ansprüche, **dadurch gekennzeichnet, dass** die Markierungsvorrichtung (15) einen vorzugsweise auf unterschiedliche Holzeigenschaften einstellbaren Applikator (20) aufweist, der am Ende eines Scherenhubmechanismus (22) angeordnet ist.

8. Ernteanordnung nach einer der vorhergehenden Ansprüche, **dadurch gekennzeichnet, dass** die Träger (16) Transponder-Tags sind, wobei eine Lesevorrichtung (22) oder eine Schreiblesevorrichtung an der Markierungsvorrichtung (15) vorgesehen ist, die die Tags beim Applizieren ausliest und/oder beschreibt.

9. Verfahren zur Holzernte mit einer Erntemaschine (11) mit einer Ernteanordnung (12) zum Schneiden von Holzstücken mittels eines in einem als Sägekasten ausgebildeten Gehäuse angeordneten Schneidmittels (14) sowie mit einer Markierungsvorrichtung (15) zum Aufbringen einer Markierung in Form eines Trägers (16) auf mindestens ein von einem Baum (17) gewonnenes Holzstück, wobei die Träger (16) aus einem am Gehäuse (13) angeordneten Magazin (18) der Markierungsvorrichtung (15) zugeführt werden,
**dadurch gekennzeichnet, dass** die Träger (16) aus einem im Sägekasten angeordneten Wechselmagazin (18) der Markierungsvorrichtung (15) vollautomatisch zugeführt werden.

10. Verfahren nach Anspruch 9, **dadurch gekennzeichnet, dass** die Träger (16) im Sägekasten einer Vereinzelungsvorrichtung (19) zugeführt werden, dort vereinzelt und dann einem Applikator (20) zugeführt werden.

11. Verfahren nach Anspruch 9 oder 10, **dadurch gekennzeichnet, dass** ein Durchmesser des Holzstücks bestimmt wird und ein Applikator (20) der Markierungsvorrichtung (15) zur vorzugsweise stammmittigen oder Stammmitte nahen Platzierung des Trägers (16) angesteuert wird.

12. Verfahren nach einem der Ansprüche 9 bis 11, **dadurch gekennzeichnet, dass** der als Transponder-Tag ausgebildete Träger (16) beim Applizieren ausgelesen und/oder beschrieben wird.
